# EUROPÄISCHE PATENTANMELDUNG

(11) **EP 2 541 043 A2**
(43) Veröffentlichungstag der Anmeldung: **02.01.2013**
(21) Anmeldenummer: 12174116.9
(22) Anmeldetag: 28.06.2012
(51) Int. Cl.: F03B 7/00, F03B 13/22, F03B 13/24

(54) **Kompakt-Wasserradvorrichtung**

(30) Priorität: 30.06.2011 AT 9652011
(71) Anmelder: Technische Universität Graz, 8010 Graz (AT); Armin Jenni, Elektromaschinenbau-Elektromechanik-CNC- Technik, 6822 Satteins (AT); Jerne, Gerald, 9122 St. Kanzian (AT)
(72) Erfinder: Jerne, Gerald, 9122 St. Kanzian (AT); Ortner, Markus Georg, 8010 Graz (AT); Schuster, Thomas, 9500 Villach (AT); Krischan, Klaus, 8010 Graz (AT); Jenni, Armin, 6822 Schnifis (AT)
(74) Vertreter: Patentanwaltskanzlei Matschnig & Forsthuber OG

(57) **Zusammenfassung**

Die Erfindung betrifft eine Kompakt-Wasserradvorrichtung (1) die eine begehbare Systemkammer (6) mit zumindest einer Energieumwandlungseinheit (9) und ein rund um die Systemkammer (6) angeordnetes und rund um die Systemkammer (6) drehbar gelagertes Wasserrad (7) aufweist, wobei die Systemkammer (6) fix mit dem Untergrund verbindbar ist und während des Betriebs des Wasserrads (7) stillsteht und die Energieumwandlungseinheit (9) über zumindest eine Kopplungsvorrichtung (14) mit dem Wasserrad (7) gekoppelt ist.

## Beschreibung

Die Erfindung betrifft eine Kompakt-Wasserradvorrichtung, die eine begehbare, fest mit dem Untergrund verbindbare Systemkammer mit zumindest einer Energieumwandlungseinheit aufweist.

Wasserräder verschiedenster Art sind seit langem zur Energiegewinnung an fließenden Gewässern in Gebrauch. Derartige Wasserräder bestehen dabei im Wesentlichen aus einer ein- oder beidseitig drehbar gelagerten Welle und darauf mittels Streben oder Speichen ringförmig angeordneten Schaufeln oder Zellen.

Die Schaufeln oder Zellen sind so bemessen, dass das Wasserrad nach Bedarf für den ober-, mittel- oder unterschlächtigen Betrieb geeignet ist. Die Streben und Speichen verbinden die Schaufeln mit der Welle. Die Welle überträgt das auftretende Drehmoment direkt oder über ein angeflanschtes Getriebe an eine Energieumwandlungseinheit, beispielsweise eine elektrische Maschine.

Diese Konstruktion bedingt, dass die Energieumwandlungseinheit, die im Wesentlichen aus dem Getriebe und der elektrischen Maschine besteht, seitlich am Wasserrad angebaut werden muss. Die Steuerungselektronik, die in einem Schaltschrank untergebracht ist, benötigt ebenfalls Platz. Weiters ist aufgrund der bei den geringen Drehzahlen auftretenden Drehmomente eine massive, schwere Welle notwendig.

Der Antrieb sowie die Steuerungseinheit müssen je nach Witterungsbedingungen oder behördlichen Bestimmungen eingehaust werden, wodurch zusätzliche Kosten anfallen. Bei bisher gebräuchlichen Konstruktionen ist also die Nutzung des Bauraumes unbefriedigend.

Diese Problematik wurde auf verschiedene Arten in Angriff genommen:

Die DE 10 2009 015 044 A1 beschreibt ein Wasserrad mit einem Segmentkranz-Ringgenerator, bei dem die Energieauskopplung über mit dem Fundament verbundene Stator-Segmente und am Rad angeordnete Rotor-Elemente erfolgt. Dadurch ist keine durchgehende Welle mehr notwendig und der Platzbedarf der Anordnung ist geringer. Allerdings ist nur eine ungenügende Energieauskopplung möglich.

Die DE 42 26 475 A1 beschreibt ein Wasserrad, bei dem ein zentraler Getriebegenerator vorgesehen ist, der gleichzeitig die Nabe des Wasserrads bildet und alle auftretenden Kräfte aufnehmen soll.

Die WO 2010/114496 A2 beschreibt ein im Wesentlichen zylinderförmiges Wasserrad, das auf einer zentralen Welle drehbar gelagert ist. Auf der Außenseite des Wasserrads sind Schaufeln angebracht, auf der Innenseite befindet sich ein Zahnkranz. Der Zahnkranz wirkt mit einem Zahnrad zusammen, das über eine Getriebeeinheit einen an der zentralen Welle angeordneten Generator antreibt. Die gewonnene Energie wird über entsprechende Leitungen an einen abgesetzt angeordneten Maschinenraum übertragen.

Diese Lösung hat den Vorteil, dass ein Teil der Systemkomponenten innerhalb des Wasserrads angeordnet ist und damit ein geringerer Platzbedarf besteht als bei herkömmlichen Lösungen.

Nachteilig ist insbesondere, dass durch die Art der Anordnung der Systemkomponenten innerhalb des Wasserrads eine Wartung und eventuelle Reparatur während des Betriebs nur schwer möglich ist. Weiters besteht durch das Vorsehen einer üblicherweise mit Öl geschmierten Getriebeeinheit die Gefahr einer Verschmutzung der Umwelt.

Es ist daher eine Aufgabe der Erfindung ein Wasserrad kompakter Bauart bereit zu stellen, das die oben genannten Probleme des Stands der Technik löst.

Diese Aufgabe wird mit einer eingangs erwähnten Kompakt-Wasserradvorrichtung erfindungsgemäß dadurch gelöst, dass die Kompakt-Wasserradvorrichtung ein um die Systemkammer herum angeordnetes drehbar gelagertes Wasserrad aufweist, wobei die Systemkammer während des Betriebs des Wasserrads stillsteht und die Energieumwandlungseinheit über zumindest eine Kopplungsvorrichtung mit dem Wasserrad gekoppelt ist.

Dank der Erfindung ist es möglich, einen bisher für Systemkomponenten ungenutzten Bereich von Wasserradvorrichtungen optimal zu verbauen und so eine kompakte, einfach zu installierende Kompakt-Wasserradvorrichtung bereitzustellen. Durch das Vorsehen der Systemkammer sind die darin angeordneten Systemkomponenten nach außen zur Umwelt hin gekapselt; dadurch werden Emissionen auf ein Minimum reduziert.

Die Systemkammer ist während des Betriebs des Wasserrads stillstehend; da das Wasserrad um die Systemkammer drehend gelagert ist, kann die Wasserradvorrichtung wellenlos ausgeführt werden. Die Vorrichtung kann als Ganzes transportiert, positioniert und montiert werden, indem die Systemkammer am Aufstellungsort mit dem Untergrund - beispielsweise einem Fundament an einem Flussufer - verbunden wird.

Im Gegensatz zu Lösungen des Stands der Technik sind bei der erfindungsgemäßen Lösung keine durchgehenden Wellen notwendig, die aufgrund ihrer hohen Drehmomente bei herkömmlichen Vorrichtungen große Abmessungen haben und daher ein nicht unwesentlicher Kostenfaktor sind. Die Systemkammer übernimmt die Belastungen des Wasserrads bzw. die bei dessen Betrieb auftretenden Momente.

Daher können die in der Systemkammer angeordneten Systemkomponenten (neben der Energieumwandlungseinheit beispielsweise elektrische Komponenten, Übersetzung, etc.) während des Betriebs der Vorrichtung gewartet bzw. repariert werden.

Bei der Energieumwandlungseinheit handelt es sich vorteilhafterweise um eine elektrische Maschine. Auch eine hydraulische Maschine oder eine pneumatische Maschine können vorgesehen sein. Je nach Bedarf kann die mechanische Energie des Wasserrads in die notwendige Energieform gebracht werden. Die jeweilige Ausführung der genannten Maschinen ist dem Fachmann bekannt.

Zur optimalen Lagerung des Wasserrads um die Systemkammer ist zwischen Wasserrad und Systemkammer zumindest eine Lagervorrichtung vorgesehen. Günstigerweise besteht die Lagervorrichtung aus einem ersten und einem zweiten Lagervorrichtungsteil, wobei der erste, der Systemkammer zugeordnete Lagervorrichtungsteil mit dem zweiten, dem Wasserrad zugeordneten Lagervorrichtungsteil zusammenwirkt. Beispielsweise sind diese Lagervorrichtungen als Wälz- oder Gleitlager ausgeführt. Grundsätzlich sind aber auch andere Lagervarianten möglich.

In einer Variante der Erfindung ist die Systemkammer im Wesentlichen zylinderförmig, wobei ihre Längsachse parallel zur Drehachse des Wasserrads verläuft. Die Systemkomponenten sind innerhalb der Systemkammer entsprechend anzuordnen, z.B. auf einer ebenen Rangierfläche, die auch ein Betreten und Arbeiten in der Systemkammer erleichtert.

In einer weiteren Variante der Erfindung umfasst das Wasserrad ein im Wesentlichen zylinderförmiges, die Systemkammer umgebendes Trägerelement, wobei auf dem Trägerelement mehrere Zellen oder Schaufeln angeordnet sind. Je nach Ausführung des Wasserrads sind entweder Zellen oder Schaufeln vorzusehen, wobei - zumindest theoretisch - auch Mischformen möglich sind. Das Trägerelement kann mit einer abgeschlossenen Mantelfläche und über die Grund- und Deckfläche der Systemkammer ragenden Deckelementen ausgeführt sein. Grundsätzlich ist aber auch eine Ausführung des Trägerelements nur als Gerüststruktur zur Befestigung der Zellen oder Schaufeln denkbar.

Um die Dichtheit der Systemkammer betreffend eindringendes Wasser sicher zu stellen sind zwischen der Systemkammer und dem Wasserrad Dichtungselemente angeordnet. Diese Dichtungselemente können beliebig ausgeführt sein, beispielsweise in Form einer Kulissendichtung im Bereich der Grund- und Deckfläche von Wasserrad bzw. Systemkammer. Dank der Dichtungselemente bleibt die Systemkammer bzw. der Raum zwischen Systemkammer und Wasserrad trocken. Empfindliche Systemkomponenten wie z.B. elektrische/elektronische Komponenten können daher in der Systemkammer verwendet werden.

Um eine sichere Verankerung der Kompakt-Wasserradvorrichtung und insbesondere der Systemkammer zu erreichen, ist die Systemkammer über zumindest eine Montagevorrichtung fest mit dem Untergrund verbindbar, wobei die Montagevorrichtung im Fall einer zylinderförmigen Ausführung der Systemkammer insbesondere an der Grund- und/oder Deckfläche der Systemkammer befestigt ist. Je nach Ausführung der Wasserradvorrichtung können eine oder zwei Montagevorrichtungen vorgesehen sein. Die Befestigung erfolgt dabei beispielsweise auf einem Fundament an einem Gewässerausleitungsgerinne, bzw, an einem Flussufer, Wasserkanal o.ä..

Um ein Manipulieren an der Wasserradvorrichtung während des Betriebs zu erlauben weist die Systemkammer auf zumindest einer normal zur Drehachse des Wasserrads orientierten Seite zumindest eine Öffnung auf. Genauer gesagt verlaufen die Seitenebenen der Systemkammer, in der die Mantel- und Deckfläche der im Wesentlichen zylinderförmigen Systemkammer liegen und in denen auch besagte Öffnungen angeordnet sein können, normal zur Drehachse des Wasserrads. Das folgt auch unmittelbar daraus, dass ja die Längsachse der Systemkammer parallel zur Drehachse des Wasserrads verläuft und die Mantel- und Deckfläche der Systemkammer normal zu dieser Längsachse liegen.

Diese Öffnung kann mit einer Abdeckung, einer Türe oder ähnlichem verschlossen sein. Durch die Öffnung kann die Systemkammer betreten werden - bei den üblichen Größen der Wasserradvorrichtung kann die Systemkammer Durchmesser bis zu 2 m haben, wodurch ein Betreten der Systemkammer durch Personen bequem möglich ist. Möglich sind auch Varianten, bei denen zwei oder mehr Öffnungen vorgesehen sind.

In einer weiteren Variante der Erfindung ist zwischen der Energieumwandlungseinheit und der Kopplungsvorrichtung eine Übersetzungsvorrichtung angeordnet. Je nach Ausführung der Energieumwandlungseinheit kann eine solche Übersetzung notwendig sein, um die Energieumwandlungseinheit in der geforderten Größe bzw. an einer optimalen Position vorsehen zu können. Die Übersetzung kann dabei drehzahländernd, aber auch nur versetzend (beispielsweise in Form eines Zwischenrads) ausgeführt sein, wobei Letzteres als Sonderfall einer 1:1-Übersetzung betrachtet werden kann.

Zur Kopplung zwischen Energieumwandlungseinheit und Wasserrad sind verschiedene Varianten möglich, beispielsweise magnetische Kopplung oder rein mechanische Energieübertragung, z.B. mittels Zahnradanordnungen. Im letzteren Fall weist die Kopplungsvorrichtung einen ersten, der Systemkammer zugeordneten und einen zweiten, dem Wasserrad zugeordneten Kopplungsvorrichtungsteil auf. Beide Kopplungsvorrichtungsteile wirken zusammen und übertragen die Bewegung vom Wasserrad zur Energieumwandlungseinheit.

Bei dem ersten Kopplungsvorrichtungsteil handelt es sich um eine Zahnradeinheit mit einem außerhalb der Systemkammer angeordneten ersten Zahnrad und einem innerhalb der Systemkammer angeordneten zweiten Zahnrad, wobei das erste und zweite Zahnrad auf einer gemeinsamen Welle angeordnet sind und es sich bei dem zweiten Kopplungsvorrichtungsteil um einen auf der inneren, der Systemkammer zugewandten Seite des Wasserrads angeordneten Zahnkranz handelt, wobei der Zahnkranz mit dem ersten Zahnrad und das zweite Zahnrad mit der Energieumwandlungseinheit zusammenwirkt. Es kann eine Übersetzungsvorrichtung bzw. ein Versatzrad vorgesehen sein. Dadurch ist eine optimale Energieübertragung zwischen Wasserrad und Energieumwandlungseinheit möglich.

Bei einem Zahnkranz handelt es sich um eine auf der Innenseite des im Wesentlichen zylinderförmig ausgeführten Wasserrads bzw. des Trägerelements angeordnete Zahnung - quasi ein "inverses" bzw. nach innen orientiertes Zahnrad oder eine Innenverzahnung.

In verschiedenen Varianten der Erfindung ist das Wasserrad für einen oberschlächtigen oder mittelschlächtigen oder unterschlächtigen Betrieb ausgelegt. Die jeweils entsprechende Ausführung ist in dem Fachmann bekannter Weise auszuführen.

Im Folgenden wird die Erfindung anhand eines nicht einschränkenden Ausführungsbeispiels, das in der Zeichnung dargestellt ist, näher erläutert. In dieser zeigt schematisch:
Fig.1 eine perspektivische Ansicht der erfindungsgemäßen Kompakt-Wasserradvorrichtung;
Fig. 2 eine perspektivische, teilweise geschnittene Ansicht der erfindungsgemäßen Kompakt-Wasserradvorrichtung;
Fig. 3 eine Seitenansicht der erfindungsgemäßen Kompakt-Wasserradvorrichtung;
Fig. 4 ein Schnitt durch die Kompakt-Wasserradvorrichtung aus Fig. 3 entlang N-N;
Fig. 5 ein Schnitt durch die Kompakt-Wasserradvorrichtung aus Fig. 3 entlang M-M;
Fig. 6 eine ausschnittsweise Seitenansicht der Kompakt-Wasserradvorrichtung;
Fig. 7 eine Draufsicht auf einen Schnitt der Ansicht aus Fig. 6 entlang K-K;
Fig. 8 eine perspektivische, teilweise geschnittene Ansicht einer Variante der erfindungsgemäßen Kompakt-Wasserradvorrichtung; und
Fig. 9 eine Schnittansicht einer weiteren Variante der erfindungsgemäßen Kompakt-Wasserradvorrichtung.

Eingangs sei erwähnt, dass in den Figuren zur leichteren Lesbarkeit gleiche Teile mit gleichen Bezugszeichen versehen sind.

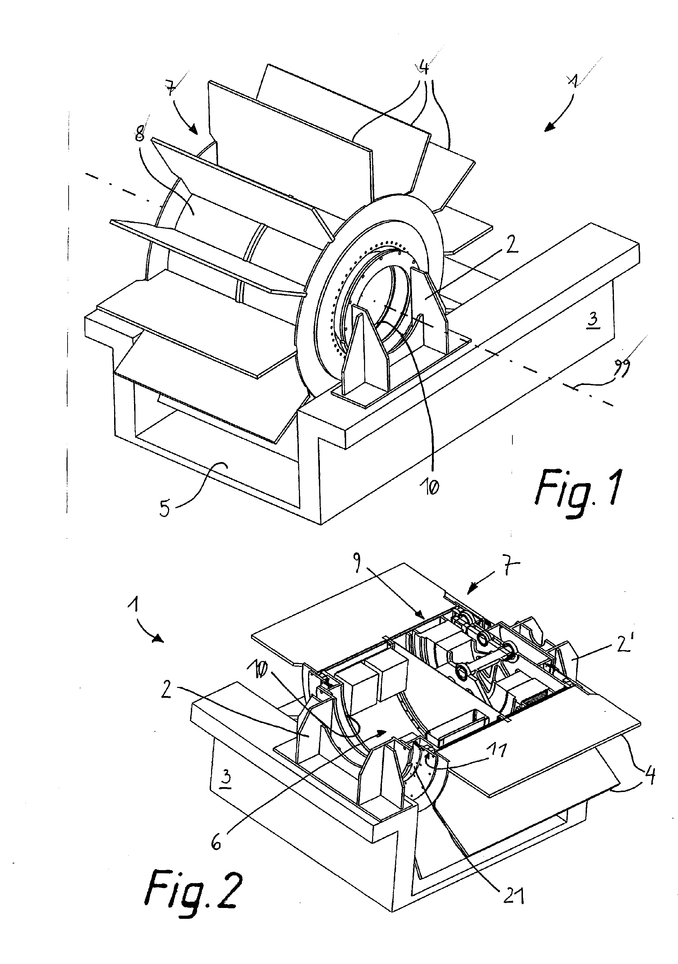

Fig. 1 zeigt eine perspektivische Ansicht einer erfindungsgemäßen Kompakt-Wasserradvorrichtung 1. Die Wasserradvorrichtung 1 umfasst eine Systemkammer 6 (in Fig. 1 nicht sichtbar) und ein rund um die Systemkammer 6 angeordnetes Wasserrad 7, das aus einem (im Wesentlichen zylinderförmigen) Trägerelement 8 und daran angeordneten Schaufeln 4 besteht. Die Systemkammer 6 ist im Wesentlichen zylinderförmig und so angeordnet, dass ihre Längsachse 99 parallel zur Drehachse des Wasserrads 7 verläuft.

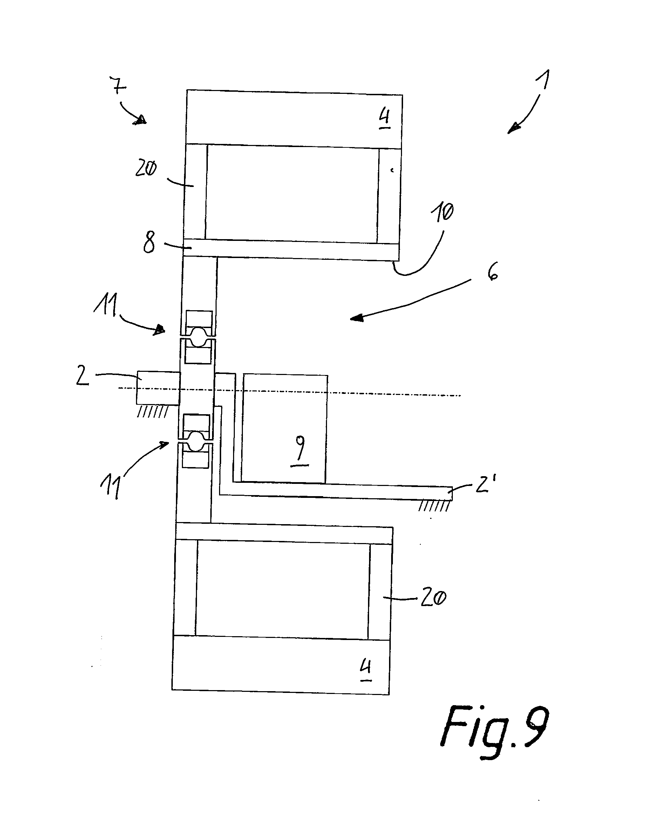

Ersichtlich ist eine Montagevorrichtung 2 zur Befestigung der Kompakt-Wasserradvorrichtung 1 auf einem Fundament 3; auf der gegenüberliegenden Seite ist eine weitere Montagevorrichtung 2' (in Fig. 1 nicht dargestellt) vorgesehen. Die Montagevorrichtungen 2, 2' sind mit der Systemkammer 6 verbunden und fixieren diese am Untergrund (bzw. am Fundament 3). Neben zwei Montagevorrichtungen 2, 2', die auch als Auflager für die Vorrichtung fungieren, sind auch Varianten mit nur einer Montagevorrichtung 2, 2' möglich (siehe Fig. 9).

Das Wasserrad 7 ist um die Systemkammer 6 drehbar gelagert - während der Drehung des Wasserrads 7 bleibt die Systemkammer 6 unbewegt.

Die Wasserradvorrichtung 1 ist so angeordnet, dass die Wasserradschaufeln 4 in einen Kanal 5 im Fundament 3 ragen. Die Wasserradschaufeln 4 sind im vorliegenden Ausführungsbeispiel beispielhaft für unterschlächtigen Betrieb ausgelegt, wobei die Ausführung der Schaufeln 4 nur schematisch ist und nicht der tatsächlichen optimalen Schaufelform für den unterschlächtigen Betrieb entspricht. Je nach Bedarf können die Schaufeln auch für ober- oder mittelschlächtigen Betrieb ausgelegt werden. Natürlich ist auch die Anordnung der Wasserradvorrichtung 1 auf einem Fundament nur beispielhaft.

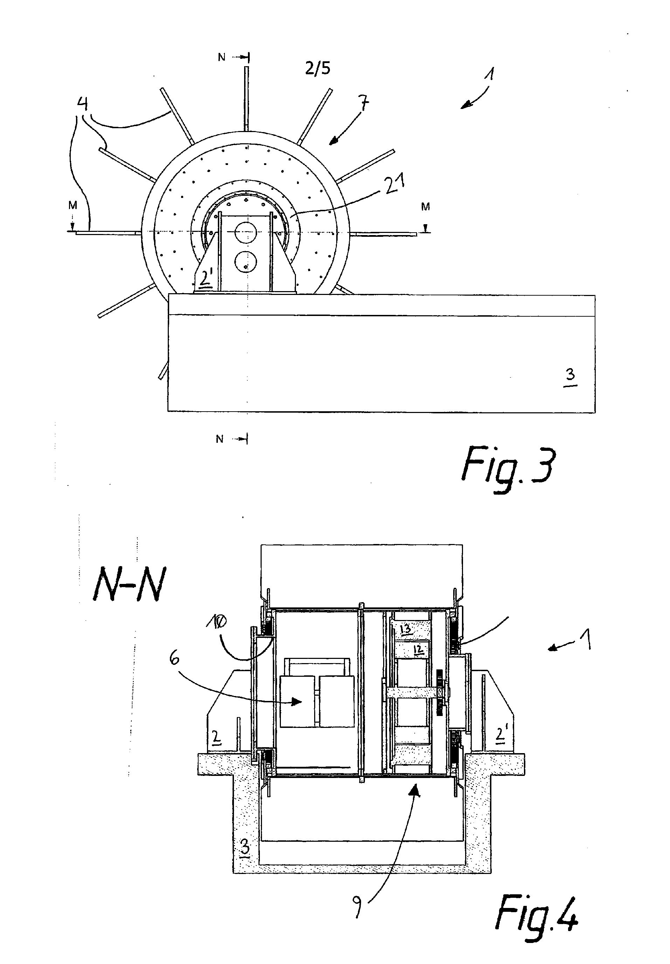

Fig. 3 zeigt eine Seitenansicht der erfindungsgemäßen Kompakt-Wasserradvorrichtung 1. Darin ist zu erkennen, dass das Wasserrad 7, bzw. dessen Trägerelement 8, die Grund- und Deckfläche der Systemkammer 6 überdecken und sich bis zur Montagevorrichtung 2' erstrecken. Zwischen Wasserrad 7 und Systemkammer 6 sind Dichtungselemente 21 vorgesehen, die das Eindringen von Feuchtigkeit verhindern. Im vorliegenden Beispiel ist das Dichtungselement 21 als Kulissendichtung ausgeführt, die also den Übergang zwischen Wasserrad 7 und Systemkammer 6 abdeckt, wobei sich die beiden aber gegeneinander bewegen können.

In Fig. 2 ist eine perspektivische Schnittdarstellung der Kompakt-Wasserradvorrichtung 1 zu sehen. Darin ist die im Wesentlichen zylinderförmige Systemkammer 6 zu erkennen, die über Montagevorrichtungen 2, 2' fest mit dem Fundament 3 verbunden ist; die Systemkammer 6 bleibt während des Betriebs des Wasserrads 7 unbewegt und kann durch eine Öffnung 10 betreten werden, wobei die Öffnung 10 allerdings auch gegen das Eintreten von Wasser abgedeckt werden kann. Zwischen Systemkammer 6 und Wasserrad 7 sind die bereits erwähnten Dichtungselemente 21 vorgesehen.

Das Wasserrad 7 ist rund um die Systemkammer 6 angeordnet und drehbar gelagert. Die erfindungsgemäße Kompakt-Wasserradvorrichtung 1 kommt daher ohne Welle aus. Bei Lösungen gemäß dem Stand der Technik ist immer eine Welle notwendig, über die die mechanische Energie an eine an die Welle gekoppelte Lastmaschine übertragen wird. Aufgrund der auftretenden hohen Drehmomente weisen die Wellen dabei vergleichsweise große Abmessungen auf und sind damit ein nicht unwesentlicher Kostenfaktor.

In der Systemkammer 6 ist eine Energieumwandlungseinheit 9 angeordnet, die die mechanische Energie des Wasserrads in andere Energieformen umwandelt. Die Nutzenergie kann je nach Anwendung als elektrische, hydraulische, pneumatische oder chemische Energie vorliegen. Entsprechend ist dann die Energieumwandlungseinheit 9 zu wählen. Im vorliegenden Ausführungsbeispiel handelt es sich bei der Energieumwandlungseinheit 9 um einen Generator. Das Bezugszeichen 9 wird in weiterer Folge sowohl allgemein für die Energieumwandlungseinheit als auch den hier vorgesehenen Generator verwendet.

Die vorliegende Erfindung erlaubt also die Anordnung von Systemkomponenten der Wasserradvorrichtung innerhalb der Vorrichtung neben der Energieumwandlungseinheit 9 können Komponenten wie Übersetzung (siehe unten), Steuerungselektronik, etc. untergebracht werden. Damit lässt sich ein Bereich des Wasserrades effizient nutzen, der bei herkömmlich ausgeführten Wasserrädern durch Speichen, Verstrebungen und eine durchgehende Welle belegt ist.

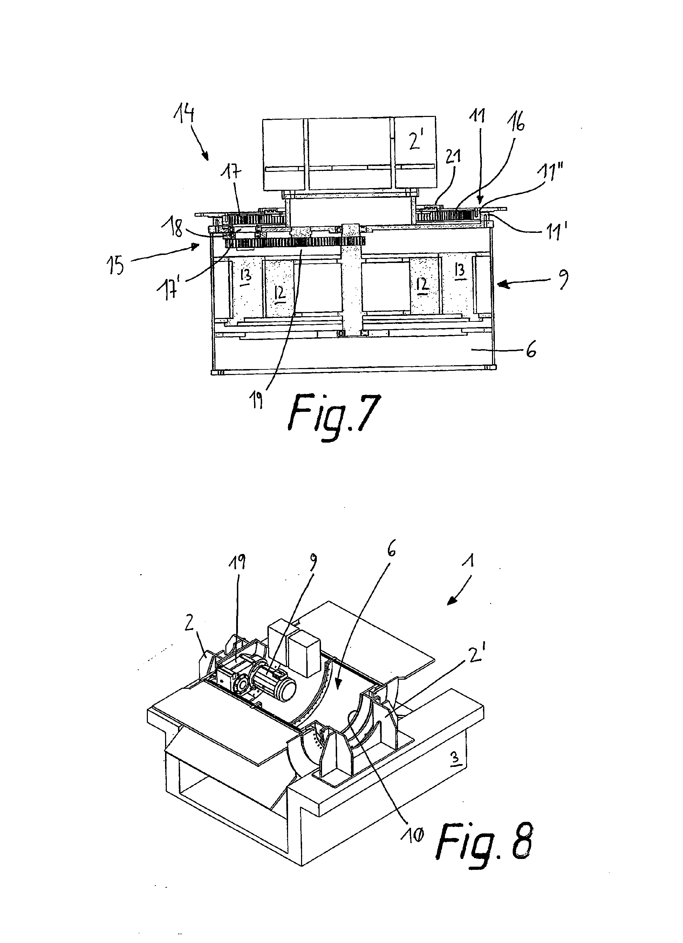

Zwischen Systemkammer 6 und Wasserrad 7 sind Lagervorrichtungen 11 angeordnet, im vorliegenden Ausführungsbeispiel bestehend aus einem ersten 11' und einem zweiten Lagervorrichtungsteil 11" - im vorliegenden Ausführungsbeispiel sind die Lagervorrichtungsteile 11', 11" an den jeweiligen Stirnseiten der Systemkammer 6 bzw. des Wasserrads 7 angeordnet und als Wälz- oder Gleitlager ausgeführt. Dabei ist jeweils der erste Lagervorrichtungsteil 11' an der Systemkammer 6 angeordnet und wirkt mit dem zweiten Lagervorrichtungsteil 11" am Wasserrad 7 zusammen (siehe z.B. Fig. 7). Natürlich sind auch andere Varianten möglich.

Fig. 4 zeigt eine Schnittansicht entlang der Linie N-N in der oben erwähnten Fig. 3. Ersichtlich ist die Fixierung über die Montagevorrichtungen 2, 2'. Die Systemkammer 6, die während des Betriebs des Wasserrads 7 stillsteht, ist über eine Öffnung 10 zugänglich - damit können während des Betriebs eventuelle Wartungs- und Überprüfungsarbeiten durchgeführt werden. Die gegenüberliegende Seite der Systemkammer 6 ist (im vorliegenden Ausführungsbeispiel) mit einer Abdeckung und auch aufgrund der Energieumwandlungseinheit 9 verschlossen. Natürlich sind auch andere Varianten möglich, bei denen beispielsweise beide Seiten offen sind.

Aus Fig. 4 ist weiters der nähere Aufbau der Energieumwandlungseinheit 9 entnehmbar: Eine drehbar gelagerte Rotoranordnung 12 ist magnetisch mit einer ruhenden Statoranordnung 13 gekoppelt. Durch die Übertragung der Bewegungsenergie des Wasserrads 7 auf die Rotoranordnung 12 (Details zu dieser Übertragung siehe unten) wird diese Bewegungsenergie in elektrische Energie umgewandelt.

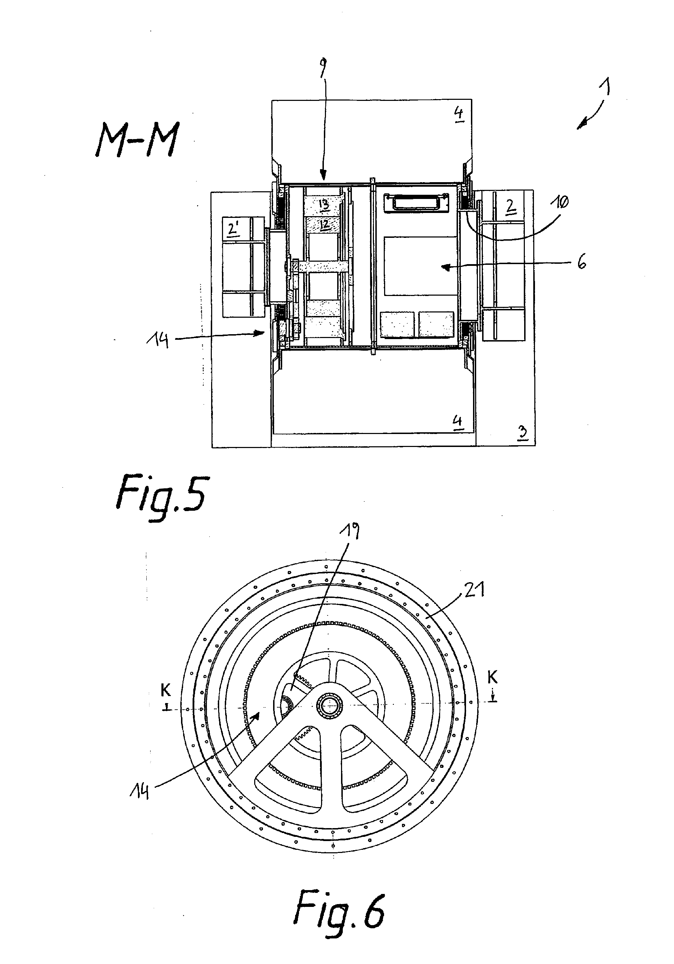

Eine Draufsicht einer Schnittansicht entlang der Linie M-M in Fig. 3 ist in Fig. 5 dargestellt. Hier ist insbesondere die Kopplungsvorrichtung 14 zwischen der Systemkammer 6 (bzw. der darin angeordneten Energieumwandlungseinheit 9) und dem Wasserrad 7 zu erkennen. Die Kopplungsvorrichtung 14 wird näher in den Figuren 6 bis 8 behandelt. Hinsichtlich der Übertragung der Energie vom Wasserrad 7 auf die Energieumwandlungseinheit 9 wird auf das Zwischenrad 19 bzw. die Übersetzungsvorrichtung und deren genauere Beschreibung in den Figuren 7 und 8 verwiesen.

Fig. 6 zeigt eine ausschnittsweise Seitenansicht der Kompakt-Wasserradvorrichtung 1 in Richtung der Längsachse 99 (Fig. 1) der Systemkammer 6 mit besonderem Schwerpunkt auf die Kopplungsvorrichtung 14. Grundsätzlich kann die Energie des Wasserrads 7 auf verschiedene Weise ausgekoppelt werden - möglich wäre beispielsweise eine magnetische Übertragung der Drehung des Wasserrads 7 auf die Energieumwandlungsvorrichtung 9 in der Systemkammer 6.

Eine solche magnetische Kopplung könnte beispielsweise so realisiert werden, dass eine der Rotorvorrichtung mit dem Wasserrad 7 rotierend angeordnet ist, während die zugehörige Statoranordnung in der Systemkammer 6 angeordnet ist - der Generator ist also quasi zweigeteilt im Bereich der Mantelfläche der im Wesentlichen zylinderförmigen Systemkammer 6 angeordnet, der Abstand zwischen Wasserrad 7 und Systemkammer 6 stellt den Luftspalt des Generators dar.

Die in der dargestellten Ausführungsvariante gewählte Kopplung ist aus Fig. 7 näher erkennbar, wo eine Draufsicht auf einen Schnitt entlang der Linie K-K in Fig. 6 dargestellt ist.

Die Kopplungsvorrichtung 14 weist einen ersten 15 und einen zweiten Kopplungsvorrichtungsteil 16 auf. Die Kopplungsvorrichtung 14 bzw. ihre Teile können verschiedenartig ausgeführt sein - z.B. kann die Kopplungsvorrichtung 14 auch als Riemen- oder Kettentrieb realisiert werden; auch eine magnetische Kopplung wie weiter oben erwähnt ist möglich.

Nachfolgend ist ein konkretes Ausführungsbeispiel mit Zahnradkopplung beschrieben.

Der erste Kopplungsvorrichtungsteil 15 ist der Systemkammer 6 zugeordnet. Es handelt sich dabei um eine Zahnradeinheit mit einem ersten, außerhalb der Systemkammer 6 angeordneten Zahnrad 17 und einem zweiten, innerhalb der Systemkammer 6 angeordneten Zahnrad 17'. Die beiden Zahnräder 17, 17' sind auf einer gemeinsamen Welle 18 angeordnet. Diese Welle 18 ragt aus dem Inneren der Systemkammer 6 heraus, außerhalb der Systemkammer 6 ist das erste Zahnrad 17 montiert, innerhalb das zweite Zahnrad 17'.

Der zweite Kopplungsvorrichtungsteil 16 ist dem Wasserrad 7 zugeordnet. Der zweite Kopplungsvorrichtungsteil 16 ist als Zahnkranz 16 (das Bezugszeichen 16 wird sowohl für den zweiten Kopplungsvorrichtungsteil als auch den im vorliegenden Ausführungsbeispiel verwendet Zahnkranz herangezogen) bzw. Innenverzahnung ausgeführt, der/die auf der inneren, der Systemkammer 6 zugewandten Seite des im Wesentlichen zylinderförmigen Wasserrads 7 angeordnet ist. Der Zahnkranz 16 ist z.B. auch in Fig. 4 gut zu erkennen.

Es sei darauf hingewiesen, dass die Kopplungsvorrichtung 14 zwar teilweise außerhalb der Systemkammer 6, aber jedenfalls innerhalb des Wasserrads 7 angeordnet ist, dessen Trägerelement 8 sich ja (im vorliegenden Ausführungsbeispiel) über die Grund- und Deckfläche der Systemkammer 6 erstreckt, wobei Dichtungselemente 21 zum Schutz vor Feuchtigkeit vorgesehen sind.

Es gilt also zu unterscheiden zwischen dem innern Volumen der Systemkammer 6, die (abgesehen von der Öffnung 10) gegen die Umgebung abgedichtet ist, und dem gekapselten Volumen, das auch noch den Bereich zwischen Systemkammer 6 und Wasserrad 7 umfasst und das durch die Dichtungselemente 21 gegen eindringende Feuchtigkeit geschützt ist.

Diese Lösung hat den Vorteil, dass auch die Kopplungsvorrichtung 14, die ja bei der vorliegenden mechanischen Ausführung geschmiert bzw. gefettet werden muss, gegen die Umgebung abgedichtet ist, sodass sie einerseits vor Umwelteinflüssen geschützt ist und andererseits kein Öl bzw. Fett in die Umgebung gelangt.

Der Zahnkranz 16 wirkt nun mit dem ersten Zahnrad 17 zusammen und bringt so bei Drehung des Wasserrads 7 die Welle 18 zum Drehen - diese Drehung wird weiter übertragen an die Energieumwandlungseinheit 9. Dazu kann z.B. ein Zwischenrad 19 (siehe auch Fig. 6) vorgesehen sein, das über Zahnräder die Drehung des Wasserrads 7 an den Generator 9 überträgt. Durch diese Übersetzung kann der Generator 9 in ausreichender Größe angefertigt sein, um die gewünschte Leistung zu erbringen. Anstatt eines Zwischenrades 19 kann auch eine drehzahlverändernde Übersetzung vorgesehen sein: Fig. 8 zeigt eine teilweise geschnittene perspektivische Ansicht der Kompakt-Wasserradvorrichtung 1 mit einer weiteren Ausführungsform der Anordnung der Energieumwandlungseinheit 9 und einer Übersetzungsvorrichtung 22.

Neben dem beschriebenen Ausführungsbeispiel sind auch noch andere Lösungen möglich. Beispielsweise zeigt Fig. 9 die schematische Darstellung einer Variante, bei der die Systemkammer 6 einseitig offen ausgeführt ist. Das bedeutet also, dass die Systemkammer 6 auf einer Seite über ihre gesamte Deckfläche offen ausgeführt ist, sodass ein Hantieren im Inneren der Systemkammer noch mehr erleichtert ist. Grundsätzlich würde eine einseitige Lagerung mit nur einer Montagevorrichtung 2' ausreichen, in Fig. 9 ist aber eine Fixierung über zwei Montagevorrichtungen 2, 2' gezeigt.

Entsprechend sind nur auf einer Seite Lagervorrichtungen 11 vorzusehen. Die Energiekopplung zwischen Wasserrad 7 (das hier mit Schaufeln 4 und Speichen 20 ausgeführt ist, die auf einem Trägerelement 8 angeordnet sind) und Systemkammer 6, bzw. die Energieübertragung auf die Energieumwandlungseinheit 9, erfolgt im Wesentlichen wie oben beschrieben.

### BEZUGSZEICHENLISTE

- 1: Kompakt-Wasserradvorrichtung
- 2, 2': Montagevorrichtung
- 3: Fundament
- 4: Schaufel
- 5: Kanal
- 6: Systemkammer
- 7: Wasserrad
- 8: Trägerelement
- 9: Energieumwandlungseinheit
- 10: Öffnung
- 11: Lagervorrichtung
- 11': erster Lagervorrichtungsteil
- 11": zweiter Lagervorrichtungsteil
- 12: Rotoranordnung
- 13: Statoranordnung
- 14: Kopplungsvorrichtung
- 15: erster Kopplungsvorrichtungsteil
- 16: zweiter Kopplungsvorrichtungsteil
- 17: erstes Zahnrad
- 17': zweites Zahnrad
- 18: Welle
- 19: Zwischenrad
- 20: Speiche
- 21: Dichtungselement
- 22: Übersetzungsvorrichtung
- 99: Längsachse

## Patentansprüche

1. Kompakt-Wasserradvorrichtung (1), die eine begehbare, fest mit dem Untergrund verbindbare Systemkammer (6) mit zumindest einer Energieumwandlungseinheit (9) aufweist, **dadurch gekennzeichnet, dass** die Kompakt-Wasserradvorrichtung (1) ein um die Systemkammer (6) herum angeordnetes drehbar gelagertes Wasserrad (7) aufweist, wobei die Systemkammer (6) während des Betriebs des Wasserrads (7) stillsteht und die Energieumwandlungseinheit (9) über zumindest eine Kopplungsvorrichtung (14) mit dem Wasserrad (7) gekoppelt ist.

2. Kompakt-Wasserradvorrichtung (1) nach Anspruch 1, **dadurch gekennzeichnet, dass** es sich bei der Energieumwandlungseinheit (9) um eine elektrische Maschine oder eine hydraulische Maschine oder eine pneumatische Maschine handelt.

3. Kompakt-Wasserradvorrichtung (1) nach Anspruch 1 oder 2, **dadurch gekennzeichnet, dass** zwischen Wasserrad (7) und Systemkammer (6) zumindest eine Lagervorrichtung (11) vorgesehen ist.

4. Kompakt-Wasserradvorrichtung (1) nach Anspruch 3, **dadurch gekennzeichnet, dass** die Lagervorrichtung (11) aus einem ersten (11') und einem zweiten Lagervorrichtungsteil (11") besteht, wobei der erste, der Systemkammer (6) zugeordnete Lagervorrichtungsteil (11') mit dem zweiten, dem Wasserrad (7) zugeordneten Lagervorrichtungsteil (11") zusammenwirkt.

5. Kompakt-Wasserradvorrichtung (1) nach Anspruch 3 oder 4, **dadurch gekennzeichnet, dass** die Lagervorrichtung (11) als Wälz- oder Gleitlager ausgeführt ist.

6. Kompakt-Wasserradvorrichtung (1) nach einem der vorhergehenden Ansprüche, **dadurch gekennzeichnet, dass** die Systemkammer (6) im Wesentlichen zylinderförmig ist, wobei ihre Längsachse (99) parallel zur Drehachse des Wasserrads (7) verläuft.

7. Kompakt-Wasserradvorrichtung (1) nach einem der vorhergehenden Ansprüche, **dadurch gekennzeichnet, dass** das Wasserrad (7) ein im Wesentlichen zylinderförmiges, die Systemkammer (6) umgebendes Trägerelement (8) umfasst und auf dem Trägerelement (8) mehrere Zellen oder Schaufeln (4) angeordnet sind.

8. Kompakt-Wasserradvorrichtung (1) nach einem der vorhergehenden Ansprüche, **dadurch gekennzeichnet, dass** zwischen der Systemkammer (6) und dem Wasserrad (7) Dichtungselemente (21) angeordnet sind.

9. Kompakt-Wasserradvorrichtung (1) nach einem der vorhergehenden Ansprüche, **dadurch gekennzeichnet, dass** die Systemkammer (6) über zumindest eine Montagevorrichtung (2, 2') fest mit dem Untergrund verbindbar ist, wobei die Montagevorrichtung (2, 2') insbesondere an der Grund- und/oder Deckfläche der Systemkammer (6) befestigt ist.

10. Kompakt-Wasserradvorrichtung (1) nach einem der vorhergehenden Ansprüche, **dadurch gekennzeichnet, dass** die Systemkammer (6) auf zumindest einer normal zur Drehachse des Wasserrads (7) orientierten Seite zumindest eine Öffnung (10) aufweist.

11. Kompakt-Wasserradvorrichtung (1) nach einem der vorhergehenden Ansprüche, **dadurch gekennzeichnet, dass** zwischen der Energieumwandlungseinheit (9) und der Kopplungsvorrichtung (14) eine Übersetzungsvorrichtung (22) angeordnet ist.

12. Kompakt-Wasserradvorrichtung (1) nach einem der vorhergehenden Ansprüche, **dadurch gekennzeichnet, dass** die Kopplungsvorrichtung (14) einen ersten (15), der Systemkammer (6) zugeordneten und einen zweiten, dem Wasserrad (7) zugeordneten Kopplungsvorrichtungsteil (16) aufweist.

13. Kompakt-Wasserradvorrichtung (1) nach Anspruch 12, **dadurch gekennzeichnet, dass** es sich bei dem ersten Kopplungsvorrichtungsteil (15) um eine Zahnradeinheit mit einem außerhalb der Systemkammer (6) angeordneten ersten Zahnrad (17) und einem innerhalb der Systemkammer (6) angeordneten zweiten Zahnrad (17') handelt, wobei das erste (17) und das zweite Zahnrad (17') auf einer gemeinsamen Welle (18) angeordnet sind und es sich bei dem zweiten Kopplungsvorrichtungsteil (16) um einen auf der inneren, der Systemkammer (6) zugewandten Seite des Wasserrads (7) angeordneten Zahnkranz (16) handelt, wobei der Zahnkranz mit dem ersten Zahnrad (17) und das zweite Zahnrad (17') mit der Energieumwandlungseinheit (9) zusammenwirkt.

14. Kompakt-Wasserradvorrichtung (1) nach einem der vorhergehenden Ansprüche, **dadurch gekennzeichnet, dass** das Wasserrad (7) für einen oberschlächtigen oder mittelschlächtigen oder unterschlächtigen Betrieb ausgelegt ist.
